# EUROPÄISCHE PATENTSCHRIFT

(11) **EP 2 603 680 B1**
(45) Veröffentlichungstag und Bekanntmachung des Hinweises auf die Patenterteilung: **14.12.2016**
(21) Anmeldenummer: 11733852.5
(22) Anmeldetag: 19.07.2011
(51) Int. Cl.: F01N 3/20, F02M 57/02

(54) **EINSPRITZVORRICHTUNG ZUM EINBRINGEN EINER HARNSTOFFLÖSUNG IN DEN ABGASSTRANG EINER BRENNKRAFTMASCHINE**
INJECTION DEVICE FOR INTRODUCING A UREA SOLUTION INTO THE EXHAUST TRACT OF AN INTERNAL COMBUSTION ENGINE
DISPOSITIF D'INJECTION POUR INTRODUIRE UNE SOLUTION D'URÉE DANS LA LIGNE D'ÉCHAPPEMENT D'UN MOTEUR À COMBUSTION INTERNE

(30) Priorität: 09.08.2010 DE 102010039051
(43) Veröffentlichungstag der Anmeldung: 19.06.2013
(73) Patentinhaber: Robert Bosch GmbH, 70442 Stuttgart (DE)
(72) Erfinder: DOEHRING, Jochen, 70439 Stuttgart-Stammheim (DE); RIPPER, Wolfgang, 70327 Stuttgart (DE); HANNEKE, Juergen, 70499 Stuttgart (DE); NENTWIG, Godehard, 70499 Stuttgart (DE)
(86) Internationale Anmeldenummer: PCT/EP2011/062295
(87) Internationale Veröffentlichungsnummer: WO 2012/019879

(56) Entgegenhaltungen:
- WO-A1-2004/033895
- WO-A1-2006/067015
- DE-A1- 10 248 433

## Beschreibung

### Stand der Technik

Die Anforderungen an die Abgasqualität von Brennkraftmaschinen, insbesondere von Brennkraftmaschinen zum Antrieb von Kraftfahrzeugen, haben in den letzten Jahren ständig zugenommen. Vor allem bei Dieselmotoren stellen NOₓ Emissionen ein Problem dar, dem mit Hilfe sogenannter SCR-Katalysatoren entgegengewirkt wird. In einem SCR-Katalysator werden umweltschädliche NOₓ mit Hilfe von NH₃, das dem Katalysator in der Regel in Form einer wässrigen Harnstofflösung zugeführt wird, in N₂ und H₂O umgewandelt.

Um die Harnstofflösung den Abgasen des Verbrennungsmotors zuzuführen, ist ein Dosiersystem erforderlich, welches herkömmlicherweise eine elektrisch betriebene Pumpe und ein elektrisch angesteuertes Dosierventil umfasst. Solche Dosiersysteme sind aufwändig und teuer in der Herstellung, Montage und Wartung.

EP 1 878 920 A1 offenbart eine Flüssigkeitspumpe mit einem Einlass, einem Auslass, einer Pumpenkammer zur Aufnahme der Flüssigkeit und einem Aktuator, der zwischen einer ersten Position und einer zweiten Position bewegbar und eingerichtet ist, um Flüssigkeit aus der Pumpenkammer in den Auslass zu pumpen. Der Einlass und der Auslass sind in Fluidverbindung mit einer Versorgungspassage, wenn der Aktuator in der ersten Position ist. Die Versorgungspassage verläuft um den Aktuator, um eine Wärmeübertragung von dem Aktuator an die Flüssigkeit zu ermöglichen.

US 2007/0295003 A1 beschreibt eine Hochdruck-Dosierpumpe, die vorgesehen ist, um einem Abgasreduktionssystem ein Reduktionsmittel zur Verfügung zu stellen. Die Hochdruck-Dosierpumpe hat einen Elektromagneten, um einen Kolben anzutreiben, der beweglich in einer inneren Bohrung eines Ventilgehäuses der Pumpe angeordnet ist. Die innere Bohrung hat eine Druckkammer mit einem Einlass-Ein-Wege-Ventil und einem Auslass-Ein-Wege-Ventil. Bewegen des Kol-bens bewirkt, dass Reduktionsmittel unter hohem Druck einer Einspritzdüse zugeführt wird. Die Einspritzdüse ist an einer Stelle angeordnet, welche eine maximale Reduktion unerwünschter Schadstoffe in den Abgasen ermöglicht.

Aus der DE 102 48 433 sind Kraftstoffeinspritzventile bekannt, bei denen eine Pumpe im Ventilkörper im Wesentlichen integriert ist.

### Offenbarung der Erfindung

Eine Aufgabe der Erfindung ist es, ein verbessertes Dosiersystem bereit zu stellen, welches ein effektives Einspritzen von Fluid ermöglicht und kostengünstig herzustellen, zu montieren und zu warten ist.

Die Aufgabe wird durch eine erfindungsgemäße Einspritzvorrichtung für ein Dosiersystem nach dem unabhängigen Patentanspruch 1 gelöst. Die abhängigen Patentansprüche beschreiben vorteilhafte Ausgestaltungen einer erfindungsgemäßen Einspritzvorrichtung.

Eine erfindungsgemäße Einspritzvorrichtung, die insbesondere zum Einspritzen von Fluid in einen Abgasstrang eines Verbrennungsmotors ausgebildet ist, hat eine Ventilnadel, einen Einspritzraum mit wenigstens einer Einspritzöffnung und einen Steuerraum. Die Einspritzvorrichtung ist so ausgebildet, dass eine Druckdifferenz zwischen dem Einspritzraum und dem Steuerraum eine Bewegung der Ventilnadel zwischen einer geöffneten Position, in der sie einen Fluidfluss durch die Einspritzöffnung aus dem Einspritzraum frei gibt, und einer geschlossenen Position, in der sie die Einspritzöffnung verschließt, bewirkt. Der Einspritzraum und der Steuerraum sind hydraulisch derart mit einem Fluidzulauf verbunden, dass ein Druckanstieg im Fluidzulauf einen Druckanstieg im Einspritzraum und einen gegenüber dem Druckanstieg im Einspritzraum zeitlich verzögerten Druckanstieg im Steuerraum zur Folge hat. Dadurch wird vorübergehend eine Druckdifferenz zwischen dem Einspritzraum und dem Steuerraum erzeugt, welche eine Bewegung der Ventilnadel von der geschlossenen Position in eine geöffnete Position zur Folge hat.

Eine solche Einspritzvorrichtung ist einfach und kostengünstig aufgebaut und im Betrieb zuverlässig. Da das Öffnen und Schließen der Düsennadel hydraulisch durch eine Druckdifferenz zwischen dem Einspritzraum und dem Steuerraum erfolgt, kommt eine solche Einspritzvorrichtung ohne aktive, direkt auf die Düsennadel einwirkende Aktuatoren aus, die aufgrund der hohen Einspritzdrücke aufwendig, teuer und störanfällig sind.

In einer Ausführungsform ist der Steuerraum über eine Steuerraum-Zulaufdrossel hydraulisch mit dem Zulauf verbunden. Durch eine solche Zulaufdrossel ist der Fluidzulauf in den Steuerraum regelbar. Insbesondere können der Druckanstieg im Steuerraum durch einen gedrosselten Fluidzulauf verzögert und das Öffnungs- und Schließverhalten der Düsennadel durch die Dimensionierung der Steuerraum-Zulaufdrossel eingestellt werden.

In einer Ausführungsform ist der Steuerraum über eine Steuerraum-Ablaufdrossel hydraulisch mit einem Ablauf verbunden, durch den Fluid aus dem Steuerraum abführbar ist. Durch eine solche Ablaufdrossel ist der Fluidabfluss aus dem Steuerraum gezielt regelbar. Insbesondere kann das Öffnungs- und Schließverhalten der Düsennadel durch die Dimensionierung Steuerraum-Ablaufdrossel eingestellt werden.

Erfindungsgemäß ist ein Einspritzraum-Ablaufkanal (Bypasskanal) mit einer Einspritzraum-Ablaufdrossel (Bypassdrossel) vorgesehen und Fluid ist durch den Einspritzraum-Ablaufkanaf und die Einspritzraum-Ablaufdrossel aus dem Einspritzraum abführbar. Durch einen solchen Einspritzraum-Ablaufkanal ist der Fluiddruck im Einspritzraum unterhalb der Düsennadel schnell abbaubar, so dass hohe Schließgeschwindigkeiten realisierbar sind.

Erfindungsgemäß ist der Zulauf über ein Ein-Wege-Ventil hydraulisch mit einem Druckraum verbunden. Der Druckraum ist ausgebildet, um den Druck des Fluids zu erhöhen. Das Ein-Wege-Ventil verhindert einen Rückfluss von Fluid aus dem Druckraum in den Zulauf. Ein solcher Rückfluss würde eine Erhöhung des Drucks im Druckraum beeinträchtigen oder sogar verhindern.

In einer Ausführungsform ist das Volumen des Druckraums durch Bewegen eines Druckelements variierbar. Der Einspritzdruck kann so über den Druck des Fluids in der Fluidzufuhr hinaus vergrößert werden. Insbesondere muss das Fluid der Einspritzvorrichtung nicht mit einem hohen (Einspritz-)Druck zugeführt werden und auf eine externe Hochdruckpumpe und aufwendige, teure und störanfällige Hochdruckzuleitungen kann verzichtet werden.

Erfindungsgemäß ist der Einspritzraum-Ablaufkanal hydraulisch mit dem Druckraum verbunden. Fluid aus dem Einspritzraum kann so, insbesondere wenn das Volumen des Druckraums während eines Ansaugvorgangs vergrößert wird, durch den Einspritzraum-Ablaufkanal aus dem Einspritzraum in den Druckraum abgeführt werden, um die Geschwindigkeit des Schließvorgangs zu erhöhen.

In einer Ausführungsform ist in dem Einspritzraum-Ablaufkanal ein Ein-Wege-Ventil vorgesehen. Das Ein-Wege-Ventil verhindert einen Fluidfluss aus dem Druckraum durch den Einspritzraum-Ablaufkanal in den Einspritzraum. Ein solcher Fluidfluss könnte das Öffnungs- und Schließverhalten der Düsennadel unkontrollierbar beeinflussen.

In einer Ausführungsform ist das Druckelement als Membran ausgebildet, welche den Druckraum begrenzt. Eine Membran stellt ein bewährtes und gut ansteuerbares Druckelement zur Verfügung. Die Membran kann aus einem Material gefertigt sein, das Kunststoff und/oder Metall enthält. Eine aus Kunststoff gefertigte Membran hat eine geringe Masse und ist mit geringer Kraft schnell bewegbar. Eine Membran, die Metall enthält, ist besonders widerstandsfähig gegenüber hohen Drücken und Temperaturen des Fluids in der Einspritzvorrichtung.

In einer Ausführungsform ist der Einspritzraum-Ablaufkanal hydraulisch mit dem Ablauf verbunden. Ein solcher mit einem Ablauf verbundener Einspritzraum-Ablaufkanal ermöglicht es, Fluid aus dem Einspritzraum besonders effektiv und schnell abzuführen.

In einer Ausführungsform ist in dem Einspritzraum-Ablaufkanal ein ansteuerbares Schaltventil ausgebildet. Durch ein ansteuerbares Schaltventil im Einspritzraum-Ablaufkanal kann der Einspritzraum-Ablaufkanal gezielt geöffnet und geschlossen werden. Dies ermöglicht eine effektive und einfache Ansteuerung der Düsennadel durch Öffnen und Schließen des Schaltventils.

In einer Ausführungsform ist auch der Steuerraum über das steuerbare Schaltventil hydraulisch mit dem Ablauf verbunden. Dies ermöglicht eine noch effektivere Ansteuerung der Düsennadel durch Öffnen und Schließen des Schaltventils.

Die Erfindung wird im Folgenden anhand der beigefügten Figuren näher erläutert.
Figur 1 zeigt eine Schnittansicht eines Ausführungsbeispiels einer erfindungsgemäßen Einspritzvorrichtung.
Figur 2 zeigt eine Schnittansicht einer weiteren Einspritzvorrichtung.

In der folgenden Figurenbeschreibung dienen Angaben wie "oben" und "unten" der besseren Erläuterung der in der jeweiligen Figur gezeigten schematischen Darstellungen eines Ausführungsbeispiels der Erfindung, ohne die Erfindung auf das gezeigte Ausführungsbeispiel oder eine bestimmte Orientierung bzw. Einbauposition zu beschränken.

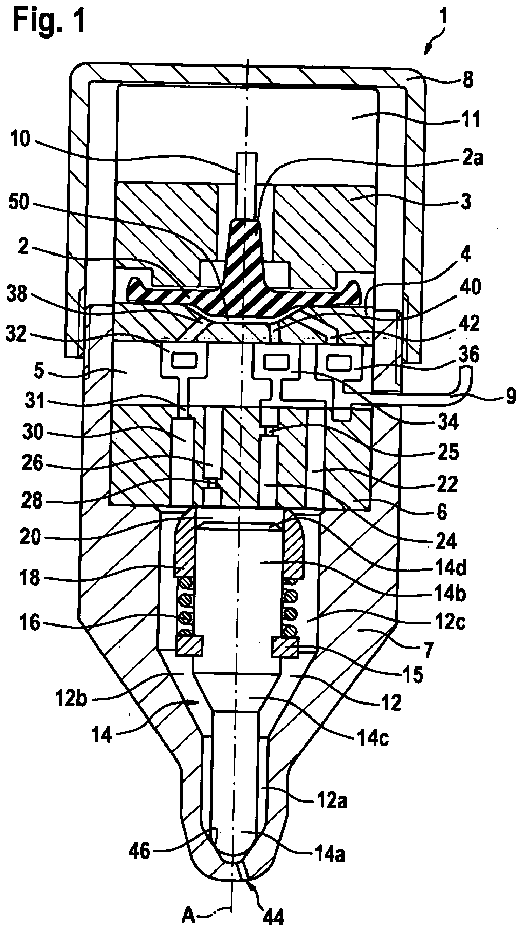

Figur 1 zeigt eine Schnittansicht eines Ausführungsbeispiels einer erfindungsgemäßen Einspritzvorrichtung 1.

Eine erfindungsgemäße Einspritzvorrichtung 1 weist einen beispielsweise zylinderförmig um eine Längsachse A ausgebildeten Düsenkörper 7 auf, entlang dessen Längsachse A ein Einspritzraum 12 ausgebildet ist. Der Einspritzraum 12 weist einen in der Figur 1 unten dargestellten ersten zylindrischen Bereich 12a und einen darüber angeordneten zweiten zylindrischen Bereich 12c auf.

In einer Ebene, die in einem rechten Winkel zur Längsachse A ausgerichtet ist, hat der erste zylindrische Bereich 12a einen kleineren Querschnitt als der zweite zylindrische Bereich 12c. Zwischen dem ersten und dem zweiten zylindrischen Bereich 12a, 12c ist ein kegelstumpfförmiger Bereich 12b ausgebildet, dessen Querschnitt sich entlang der Längsachse A vom Querschnitt des ersten zylindrischen Bereichs 12a auf den Querschnitt des zweiten zylindrischen Bereichs 12c erweitert.

An dem in der Figur 1 unten dargestellten stirnseitigen Ende des ersten zylindrischen Bereichs 12a des Einspritzraumes 12 ist eine Einspritzöffnung 44 ausgebildet, durch die während eines Einspritzvorgangs Fluid aus dem Einspritzraum 12 austritt.

Im Einspritzraum 12 ist eine im Wesentlichen zylinderförmig ausgebildete Düsennadel 14 angeordnet, deren Längsachse entlang der Längsachse A des Düsenkörpers 7 ausgerichtet ist. Die Düsennadel 14 ist mit einem unteren zylindrischen Bereich 14a und einem oberen zylindrischen Bereich 14b ausgebildet, wobei der obere zylindrische Bereich 14b der Düsennadel 14 in einer Ebene, die in einem rechten Winkel zur Längsachse A der Düsennadel 14 angeordnet ist, einen größeren Querschnitt als der untere zylindrische Bereich 14a hat. Zwischen dem unteren zylindrischen Bereich 14a und dem oberen zylindrischen Bereich 14b ist eine kegelstumpfförmiger Übergangsbereich 14c ausgebildet, dessen Querschnitt sich in seinem Verlauf parallel zur Längsachse A vom Querschnitt des unteren zylindrischen Bereichs 14a auf den Querschnitt des oberen zylindrischen Bereichs 14b der Düsennadel 14 vergrößert.

Die Düsennadel 14 ist entlang der Längsachse A zwischen einer unteren Verschlussposition und einer oberen, geöffneten Position bewegbar. Befindet sich die Düsennadel 14 in der unteren Verschlussposition, so liegt der untere zylindrische Bereich 14a der Düsennadel 14 auf einem oberhalb der Einspritzöffnung 44 am Düsenkörper 7 ausgebildeten Ventilsitz 46 auf und verschließt den Ventilsitz 46 im Wesentlichen fluiddicht, so dass kein Fluid durch die Einspritzöffnung 44 aus dem Einspritzraum 12 austreten kann.

Ein obere Ende 14d der Düsennadel 14 ist von einer zylindrischen Steuerraumhülse 18 umgeben. Innerhalb der Steuerraumhülse 18 ist oberhalb des oberen Endes 14d der Düsennadel 14 ein Steuerraum 20 ausgebildet, dessen Volumen durch Bewegen der Düsennadel 14 entlang der Längsachse A variierbar ist. Umgekehrt ist die Düsennadel 14 durch Variieren der Druckdifferenz zwischen dem Steuerraum 20 und dem Einspritzraum 12 bewegbar.

Am Umfang des oberen zylindrischen Bereichs 14b der Düsennadel 14 ist unterhalb der Steuerraumhülse 18 ein Abstützring 15 ausgebildet. Zwischen dem Abstützring 15 und der Steuerraumhülse 18 ist um den Umfang der Düsennadel 14 ein zylindrisches Düsennadel-Federelement 16 angeordnet, welches sich mit seinen Stirnseiten einerseits an der Steuerraumhülse 18 und andererseits an dem Abstützring 15 abstützt und die Düsennadel 14 elastisch in Richtung der unteren Verschlussposition drückt.

Auf seiner oberen, von der Düsennadel 14 abgewandten Seite wird der Steuerraum 20 durch eine Drosselplatte 6 begrenzt. Innerhalb der Drosselplatte 6 ist eine Anzahl von Fluidkanälen 22, 24, 26, 30 ausgebildet.

Oberhalb der Drosselplatte 6 ist eine Ventilplatte 5 angeordnet. In der Ventilplatte 5 sind drei Ein-Wege-Ventile 32, 34, 36 ausgebildet, wobei jedes der Ein-Wege-Ventile 32, 34, 36 in hydraulischer Verbindung mit wenigstens einem der in der Drosselplatte 6 ausgebildeten Fluidkanäle 22, 24, 26, 30 steht. Die Ein-Wege-Ventile 32, 34, 36 könne beispielsweise als Rückschlagventile ausgebildet sein.

Oberhalb der Ventil platte 5 ist eine Steuerplatte 4 angeordnet, in der ein Druckraum 50 und drei Fluidkanäle 36, 40 und 42 ausgebildet sind. Jeder der drei Fluidkanäle 36, 40 und 42 verbindet den Druckraum 50 hydraulisch mit jeweils einem der in der Ventilplatte 5 ausgebildeten Ein-Wege-Ventile 32, 34, 36.

Insbesondere ist der Druckraum 50 über einen Zulaufkanal 42 und ein Zulaufventil 36 hydraulisch mit einem Fluidzulauf 9 verbunden, durch welchen der Einspritzvorrichtung 1 Fluid von einer externen Fluidquelle zuführbar ist. Das Zulaufventil 36 ist als Ein-Wege-Ventil so ausgebildet, dass es einen Fluidfluss aus dem Fluidzulauf 9 in den Druckraum 50 ermöglicht und einen Rückfluss von Fluid aus dem Druckraum 50 in den Fluidzulauf 9 verhindert.

Der Druckraum 50 ist über einen in der Ventilplatte 4 ausgebildeten Druckkanal 40, ein in der Ventilplatte 5 ausgebildetes Druckventil 34 und einen in der Drosselplatte 6 ausgebildeten Steuerraumkanal 24, in dem eine Steuerraumdrossel 25 vorgesehen ist, hydraulisch mit dem Steuerraum 20 verbunden. Zusätzlich verbindet ein in der Drosselplatte 4 ausgebildeter Einspritzraumkanal 22 das Druckventil 34 hydraulisch mit dem Einspritzraum 12. Das Druckventil 34 ist als Ein-Wege-Ventil derart ausgebildet, dass es Fluidfluss aus dem Druckraum 50 in den Steuerraum 20 und in den Einspritzraum 12 zulässt und Fluidfluss aus dem Steuerraum 20 und/oder aus dem Einspritzraum 12 in den Druckraum 50 verhindert.

Der Einspritzraum 12 ist zusätzlich durch einen in der Drosselplatte 6 ausgebildeten Einspritzraum-Ablaufkanal (Bypasskanal) 30, der eine Einspritzraum-Ablaufdrossel (Bypassdrossel) 31 aufweist, und ein in der Ventilplatte 5 ausgebildetes Einspritzraum-Ablaufventil (Bypassventil) 32 hydraulisch mit dem Druckraum 50 verbunden. Das Einspritzraum-Ablaufventil 32 ist als Ein-Wege-Ventil derart ausgebildet, dass es Fluidfluss aus dem Einspritzraum 12 in den Druckraum 50 ermöglicht und Fluidfluss in der entgegengesetzten Richtung, d.h. aus dem Druckraum 50 in den Einspritzraum 12, verhindert.

Eine von der Steuerplatte 4 abgewandte Seite des Druckraums 50 wird durch eine elastische Membran 2 begrenzt. Die elastische Membran 2 ist oberhalb der Ventilplatte 5 in einer Ebene aufgespannt, die im Wesentlichen in einem rechten Winkel zur Längsachse A angeordnet ist. Ein mittlerer Bereich 2a der Membran 2, der um die Längsachse A ausgebildet ist, ist mit einem Anker 10 verbunden, der auf der von der Steuerplatte 4 abgewandten Seite der Membran 2 angeordnet ist.

Um einen oberen, von der Membran 2 abgewandten Bereich des Ankers 10 ist ein Elektromagnet 11 angeordnet, der durch ein Distanzstück 3 in einer Richtung parallel zur Längsachse A von der elastischen Membran 2 beabstandet ist. Der Anker 10 ist durch Aktivieren bzw. Deaktivieren des Elektromagneten 11 in einer Richtung parallel zur Längsachse A bewegbar. Durch eine derartige Bewegung des Ankers 10 wird die elastische Membran 2 derart bewegt, dass das Volumen des Druckraums 50 variiert wird.

Der Elektromagnet 11, das Distanzstück 3, der Anker 10 und die Membran 2 sind in Umfangsrichtung und auf der von der Düsennadel 4 abgewandten Seite von einer becherförmigen Düsenspannmutter 8 umgeben, die nach unten offen ist. Der Düsenkörper 7 ist derart in die offene Seite der Düsenspannmutter 8 eingeführt und mit der Düsenspannmutter 8 verschraubt, dass die Einspritzvorrichtung 1 fluiddicht verschlossen ist.

Zum Ansaugen von Fluid in den Druckraum 50 wird der Elektromagnet 11 deaktiviert. Die bei aktiviertem Elektromagneten 11 verformte elastische Membran 2 bewegt sich aufgrund ihrer eigenen Elastizität in ihre Ausgangs- und Ansaugposition. Fluid aus einem Fluidzulauf 9, der mit dem in der Ventilplatte 5 ausgebildeten Zulaufventil 36 hydraulisch verbunden ist, strömt durch das Zulaufventil 36, das sich für einen Fluidfluss in dieser Richtung öffnet, und einen in der Steuerplatte 4 ausgebildeten Zulaufkanal 42 in den Druckraum 50.

Solange der Druck im Druckraum 50 nicht größer als der Druck im Einspritzraum 12 bzw. im Steuerraum 20 ist, sind das Einspritzraum-Ablaufventil 32 und das Druckventil 34 geschlossen. Das Einspritzraum-Ablaufventil 32 und das Druckventil 34 verhindern dadurch, dass Fluid aus dem Einspritzraum 12 und/oder aus dem Steuerraum 20 in den Druckraum 50 strömt.

Um einen Einspritzvorgang auszulösen, wird der Elektromagnet 11 aktiviert (bestromt), so dass sich durch die von dem Elektromagneten 11 erzeugte magnetische Kraft der Anker 10 und mit ihm der mittlere Bereich 2a der elastischen Membran 2 "nach unten" in Richtung auf die Steuerplatte 4 bewegen. Die elastische Membran 2 reduziert das Volumen des Druckraums 50 und der Druck im Druckraum 50 erhöht sich.

Durch den erhöhten Druck im Druckraum 50 öffnet das Druckventil 34 und Fluid aus dem Druckraum 50 strömt durch das geöffnete Druckventil 34 und einen in der Drosselplatte 6 ausgebildeten Zulaufkanal 22 in den Einspritzraum 12.

Gleichzeitig strömt Fluid aus dem Druckraum 50 durch das geöffnete Druckventil 34 und einen in der Drosselplatte 6 ausgebildeten Steuerraumkanal 24 in den Steuerraum 20.

In dem Steuerraumkanal 24 ist eine Steuerraumdrossel 25 ausgebildet, wodurch der Fluidfluss aus dem Druckraum 50 in den Steuerraum 20 gedrosselt und der durch den Fluidfluss im Steuerraum 20 bewirkte Druckanstieg gegenüber dem durch diesen Fluidfluss aus dem Druckraum 50 in den Einspritzraum 12 bewirkten Druckanstieg im Einspritzraum 12 zeitlich verzögert ist.

Durch den im Einspritzraum 12 schneller als im Steuerraum 20 ansteigenden Fluiddruck wirkt eine nach oben gerichtete Kraft auf die Düsennadel 14, welche die Düsennadel 14 gegen die Kraft der Düsennadelfeder 16 und den aufgrund der Steuerraumdrossel 25 noch nicht so stark angestiegenen Druck im Steuerraum 20 von der Verschlussposition in eine geöffnete Position bewegt. Der untere Bereich 14a der Düsennadel 14 hebt vom Ventilsitz 46 ab und Fluid entweicht durch die Einspritzöffnung 44 aus dem Einspritzraum 12 (Einspritzvorgang).

Fluid, welches durch die Öffnungsbewegung der Düsennadel 14 aus dem Steuerraum 20 verdrängt wird, entweicht durch einen in der Drosselplatte 6 ausgebildeten Ablaufkanal 26, in dem eine Ablaufdrossel 28 vorgesehen ist, und einen in der Figur 1 nicht sichtbaren Ablauf aus dem Steuerraum 20.

Durch die geöffnete Einspritzöffnung 44 strömt solange unter erhöhtem Druck stehendes Fluid aus dem Einspritzraum 12 aus, bis der Fluiddruck im Einspritzraum 12 aufgrund des aus dem Einspritzraum 12 entweichenden Fluids soweit abgefallen ist, dass er nicht mehr ausreicht, um die Düsennadel 14 gegen die Kombination des Fluiddrucks im Steuerraum 20 und die Kraft des Düsennadelfederelements 16 in einer geöffneten Position zu halten. Die Düsennadel 14 wird durch den Fluiddruck im Steuerraum 20 und die Kraft des Düsennadelfederelements 16 wieder in die untere Verschlussposition gedrückt, in welcher der untere Bereich 14a der Düsennadel 14 auf dem Ventilsitz 46 aufliegt und die Einspritzöffnung 44 verschließt.

Der Elektromagnet 11 wird deaktiviert und die Membran 2 bewegt sich wieder in ihre Ausgangs- und Ansaugposition. Das Volumen des Druckraums 50 wird vergrößert und der Druck im Druckraum 50 reduziert, so dass der Druck im Einspritzraum 12 durch zusätzlichen Fluidfluss aus dem Einspritzraum 12 durch den Einspritzraum-Ablaufkanal 30 in den Druckraum 50 schneller abgebaut werden kann, um die Geschwindigkeit des Schließvorgangs der Düsennadel 14 zu erhöhen.

Der Einspritzraum-Ablaufkanal 30, die Einspritzraum-Ablaufdrossel 31 und das Einspritzraum-Ablaufventil 32 sind optional, um den Schließvorgang zu beschleunigen. Das Öffnungs- und Schließverhalten der Düsennadel 14 und insbesondere die Öffnungs- und Schließgeschwindigkeit sind durch die Dimensionierung der Steuerraumdrossel 25, der Ablaufdrossel 28 und ggf. der Einspritzraum-Ablaufdrossel 31 gezielt einstellbar.

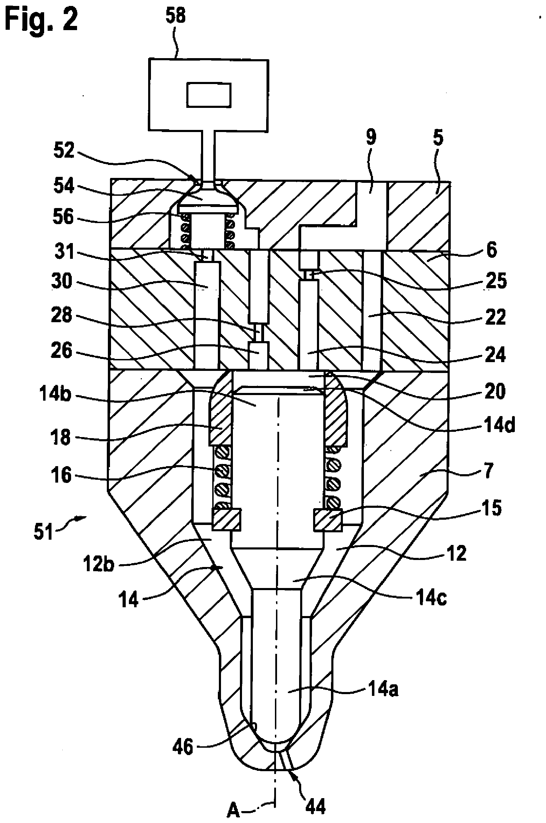

Figur 2 zeigt eine weitere Einspritzvorrichtung 51.

Der Düsenkörper 7 mit dem Einspritzraum 12 und der Düsennadel 14 sowie die Drosselplatte 6 des zweiten Ausführungsbeispiels sind genauso wie im ersten, in der Figur 1 gezeigten, Ausführungsbeispiel ausgebildet und werden daher nicht erneut im Detail beschrieben.

Der Druck erzeugende Teil der Einspritzvorrichtung 51, der den gewünschten Einspritzdruck erzeugt, ist in dem in der Figur 2 gezeigten Ausschnitt nicht gezeigt.

Um einen Einspritzvorgang auszulösen, wird unter Einspritzdruck stehendes Fluid in den in der Ventilplatte 5 ausgebildeten Zulauf 9, in dem in diesem Ausführungsbeispiel kein Ein-Wege-Ventil vorgesehen ist, geführt. Das Fluid strömt wie im Ausführungsbeispiel durch den in der Drosselplatte 6 ausgebildeten Zulaufkanal 22 in den Einspritzraum 12 und durch den Steuerraumkanal 24 und die Steuerraumdrossel 25 in den Steuerraum 20.

Der Steuerraum 20 ist über einen Steuerraum-Ablaufkanal 26, in dem eine Steuerraum-Ablaufdrossel 28 vorgesehen ist, mit einem Ventilraum eines in der Ventilplatte 5 ausgebildeten Schaltventils 52 verbunden. Der Einspritzraum 12 ist über einen Einspritzraum-Ablaufkanal 30, in dem eine Einspritzraum-Ablaufdrossel 31 ausgebildet ist, hydraulisch mit dem Ventilraum des Schaltventils 52 verbunden. Das Schaltventil 52 mündet ausgangsseitig in einen nicht gezeigten Ablauf, der ausgebildet ist, um Fluid aus der Einspritzvorrichtung 52 abzuführen.

Das Schaltventil 52 weist einen beweglichen Schließkörper 54 auf, der durch ein den Schließkörper 54 umgebendes Schaltventilfederelement 56 im Ruhezustand in eine obere Verschlussposition gedrückt wird, in der er einen Fluidfluss aus dem Ventilraum in den Ablauf verhindert.

Im Gegensatz zu den Ventilen 32, 34, 36 des Ausführungsbeispiels ist das Schaltventil 52 kein passives Ein-Wege-Ventil, welches durch den Fluidfluss bzw. eine Differenz des Fluiddrucks gesteuert wird. Der Verschlusskörper 54 des

Schaltventils 52 ist vielmehr mechanisch mit einem oberhalb der Ventilplatte 5 angeordneten Aktuator 58, der z.B. als elektromagnetischer oder als Piezo-Aktuator ausgebildet ist, verbunden. Der Verschlusskörper 54 ist durch Aktivieren des Aktuators 58 gegen die Kraft des Schaltventilfederelements 56 in eine geöffnete Position bewegbar, in der er einen Fluidfluss durch das Schaltventil 52 ermöglicht. Bei geöffnetem Schaltventil 52 kann Fluid durch den Ablaufkanal 26 und die Ablaufdrossel 28 aus dem Steuerraum 20 sowie durch den Einspritzraum-Ablaufkanal 30 und die Einspritzraum-Ablaufdrossel 31 aus dem Einspritzraum 12 in den stromabwärts des Schaltventils 52 angeordneten, in der Figur 2 nicht gezeigten, Ablauf ablaufen.

Um einen Einspritzvorgang auszulösen, wird dem Zulauf 25 der Einspritzvorrichtung 51 bei geschlossenem Schaltventil 52 unter Einspritzdruck stehendes Fluid zugeführt. Wie im ersten Ausführungsbeispiel bewirkt die im Steuerraumkanal 24 ausgebildete Steuerraumdrossel 25, dass das zugeführte Fluid schneller in den Einspritzraum 12 als in den Steuerraum 20 strömt und der Druck im Einspritzraum 12 schneller ansteigt als im Steuerraum 20. Sobald die Druckdifferenz zwischen dem Einspritzraum 12 und dem Steuerraum 20 einen vorgegebenen kritischen Wert überschreitet, bewegt sich die Düsennadel 14 von der Verschlussposition in eine geöffnete Position und gibt die Einspritzöffnung 44 frei, so dass Fluid aus dem Einspritzraum 12 durch die Einspritzöffnung 44 ausströmt (Einspritzvorgang).

Um den Einspritzvorgang zu beenden, wird der Aktuator 58 so angesteuert, dass er das Schaltventil 52 öffnet und Fluid aus dem Einspritzraum 12 durch den Einspritzraum-Ablaufkanal 30 und die Einspritzraum-Ablaufdrossel 31 sowie aus dem Steuerraum 20 durch den Steuerraum-Ablaufkanal 26 und die Steuerraum-Ablaufdrossel 28 abläuft. Die Einspritzraum-Ablaufdrossel 31 und die Steuerraum-Ablaufdrossel 28 sind dabei so dimensioniert, dass der Druck im Einspritzraum 12 schneller abfällt als im Steuerraum 20. Der Druck im Steuerraum 20 ist dadurch zeitweise höher als der Druck im Einspritzraum 12. Durch diese Druckdifferenz zwischen dem Steuerraum 20 und dem Einspritzraum 12 wird die Düsennadel 14 im Zusammenwirken mit dem Düsennadelfederelement 16 in die Verschlussposition gedrückt, in der die Düsennadel 14 die Einspritzöffnung 44 verschließt, und der Einspritzvorgang ist beendet.

Die Bauteile einer erfindungsgemäßen Einspritzvorrichtung 1, 51 und insbesondere die Membran 2 und die Ventile 32, 34, 36, 52 können kostengünstig und Gewicht sparend aus Kunststoff gefertigt sein. Bei erhöhten Anforderungen an die Druck- und Temperaturbeständigkeit können auch Metallteile verwendet werden. Insbesondere können als Ventile Metallventile, wie sie aus Common-Rail-Kraftstoffinjektoren bekannt sind, verwendet werden.

## Patentansprüche

1. Einspritzvorrichtung (1; 51), insbesondere zum Einspritzen von Fluid in einen Abgasstrang eines Verbrennungsmotors, mit
einer Ventilnadel (14),
einem Einspritzraum (12) mit wenigstens einer Einspritzöffnung (44) und einem Steuerraum (20),
wobei die Einspritzvorrichtung (1; 51) so ausgebildet ist, dass eine Druckdifferenz zwischen dem Einspritzraum (12) und dem Steuerraum (20) eine Bewegung der Ventilnadel (14) zwischen einer geöffneten Position, in der die Ventilnadel (14) einen Fluidfluss durch die Einspritzöffnung (44) freigibt, und einer geschlossenen Position, in der die Ventilnadel (14) die Einspritzöffnung (44) verschließt, bewirkt,
wobei der Einspritzraum (12) und der Steuerraum (20) derart hydraulisch mit einem Zulauf (40, 42; 9) verbunden sind, dass ein Druckanstieg im Zulauf (40, 42; 9) einen Druckanstieg im Einspritzraum (12) und einen gegenüber dem Druckanstieg im Einspritzraum (12) zeitlich verzögerten Druckanstieg im Steuerraum (20) zur Folge hat, **dadurch gekennzeichnet, dass** ein
Einspritzraum-Ablaufkanal (30) mit einer Einspritzraum-Ablaufdrossel (31) vorgesehen und Fluid aus dem Einspritzraum (12) durch den Einspritzraum-Ablaufkanal (30) abführbar ist, wobei der Zulauf (22) über ein Ein-Wege-Zulaufventil (34) hydraulisch mit einem Druckraum (50) verbunden ist und wobei der Druckraum (50) mit einer Vorrichtung ausgebildet ist, die geeignet ist, um den Druck von Fluid im Druckraum (50) zu erhöhen, und wobei der Einspritzraum-Ablaufkanal (30) hydraulisch mit dem Druckraum (50) verbunden ist.

2. Einspritzvorrichtung (1; 51) nach Anspruch 1, wobei der Steuerraum (20) über eine Steuerraum-Zulaufdrossel (25) hydraulisch mit dem Zulauf (40, 42; 9) verbunden ist.

3. Einspritzvorrichtung (1; 51) nach Anspruch 1 oder 2, wobei der Steuerraum (20) über eine Steuerraum-Ablaufdrossel (28) hydraulisch mit einem Ablauf verbunden ist, durch den Fluid aus dem Steuerraum (20) abführbar ist.

4. Einspritzvorrichtung (1) nach einem der vorhergehenden Ansprüche, wobei in dem Einspritzraum-Ablaufkanal (30) ein Einspritzraum-Ablaufventil (32) vorgesehen ist, das insbesondere als Ein-Wege-Ventil ausgebildet ist.

5. Einspritzvorrichtung (1) nach einem der vorhergehenden Ansprüche, wobei das Volumen des Druckraums (50) durch Bewegen eines Druckelements (2) variierbar ist.

6. Einspritzvorrichtung (51) nach Anspruch 3, wobei der Einspritzraum-Ablaufkanal (30) über ein steuerbares Schaltventil (52) hydraulisch mit dem Ablauf verbunden ist.

7. Einspritzvorrichtung (51) nach Anspruch 6, wobei der Steuerraum (20) über das steuerbare Schaltventil (52) hydraulisch mit dem Ablauf verbunden ist.

## Claims

1. Injection device (1; 51), in particular for injecting fluid into an exhaust tract of an internal combustion engine, having
a valve needle (14),
an injection chamber (12) with at least one injection orifice (44), and
a control chamber (20),
wherein the injection device (1; 51) is designed such that a pressure difference between the injection chamber (12) and the control chamber (20) causes a movement of the valve needle (14) between an open position, in which the valve needle (14) permits a fluid flow through the injection orifice (44), and a closed position, in which the valve needle (14) closes the injection orifice (44), wherein the injection chamber (12) and the control chamber (20) are hydraulically connected to an inlet (40, 42; 9) in such a way that a pressure increase in the inlet (40, 42; 9) results in a pressure increase in the injection chamber (12) and, after a time delay in relation to the pressure increase in the injection chamber (12), a pressure increase in the control chamber (20), **characterized in that** an injection chamber outlet duct (30) having an injection chamber outlet throttle (31) is provided and fluid can be discharged from the injection chamber (12) through the injection chamber outlet duct (30), wherein the inlet (22) is hydraulically connected via one-way inlet valve (34) to a pressure chamber (50), and wherein the pressure chamber (50) is formed with a device which is suitable for increasing the pressure of fluid in the pressure chamber (50), and wherein the injection chamber outlet duct (30) is hydraulically connected to the pressure chamber (50).

2. Injection device (1; 51) according to Claim 1, wherein the control chamber (20) is hydraulically connected via a control chamber inlet throttle (25) to the inlet (40, 42; 9).

3. Injection device (1; 51) according to Claim 1 or 2, wherein the control chamber (20) is hydraulically connected via a control chamber outlet throttle (28) to an outlet through which fluid can be discharged from the control chamber (20).

4. Injection device (1) according to one of the preceding claims, wherein in the injection chamber outlet duct (30) there is provided an injection chamber outlet valve (32) which is formed in particular as a one-way valve.

5. Injection device (1) according to one of the preceding claims, wherein the volume of the pressure chamber (50) can be varied by movement of a pressure element (2).

6. Injection device (51) according to Claim 3, wherein the injection chamber outlet duct (30) is hydraulically connected to the outlet via a controllable switching valve (52).

7. Injection device (51) according to Claim 6, wherein the control chamber (20) is hydraulically connected via the controllable switching valve (52) to the outlet.

## Revendications

1. Dispositif d'injection (1 ; 51), en particulier pour l'injection de fluide dans une ligne d'échappement d'un moteur à combustion interne, comprenant
un pointeau de soupape (14),
un espace d'injection (12) comprenant au moins une ouverture d'injection (44) et un espace de commande (20),
le dispositif d'injection (1 ; 51) étant réalisé de telle sorte qu'une différence de pression entre l'espace d'injection (12) et l'espace de commande (20) provoque un déplacement du pointeau de soupape (14) entre une position ouverte dans laquelle le pointeau de soupape (14) libère un flux de fluide à travers l'ouverture d'injection (44) et une position fermée dans laquelle le pointeau de soupape (14) ferme l'ouverture d'injection (44),
l'espace d'injection (12) et l'espace de commande (20) étant connectés hydrauliquement à une alimentation (40, 42 ; 9) de telle sorte qu'une augmentation de pression dans l'alimentation (40, 42 ; 9) entraîne une augmentation de pression dans l'espace d'injection (12) et une augmentation de pression dans l'espace de commande (20), retardée dans le temps par rapport à l'augmentation de pression dans l'espace d'injection (12), **caractérisé en ce qu'**un canal d'écoulement de l'espace d'injection (30) est pourvu d'un étranglement d'écoulement de l'espace d'injection (31) et du fluide peut être évacué hors de l'espace d'injection (12) à travers le canal d'écoulement de l'espace d'injection (30), l'alimentation (22) étant connectée hydrauliquement à un espace de pression (50) par le biais d'une soupape d'alimentation unidirectionnelle (34) et l'espace de pression (50) étant réalisé avec un dispositif approprié pour augmenter la pression de fluide dans l'espace de pression (50), et le canal d'écoulement de l'espace d'injection (30) étant connecté hydrauliquement à l'espace de pression (50).

2. Dispositif d'injection (1 ; 51) selon la revendication 1, dans lequel l'espace de commande (20) est connecté hydrauliquement à l'alimentation (40, 42 ; 9) par le biais d'un étranglement d'alimentation de l'espace de commande (25).

3. Dispositif d'injection (1 ; 51) selon la revendication 1 ou 2, dans lequel l'espace de commande (20) est connecté hydrauliquement à un écoulement par le biais d'un étranglement d'écoulement de l'espace de commande (28), à travers lequel du fluide peut être évacué hors de l'espace de commande (20).

4. Dispositif d'injection (1) selon l'une quelconque des revendications précédentes, dans lequel une soupape d'écoulement de l'espace d'injection (32) est prévue dans le canal d'écoulement de l'espace d'injection (30), laquelle est réalisée notamment sous forme de soupape unidirectionnelle.

5. Dispositif d'injection (1) selon l'une quelconque des revendications précédentes, dans lequel le volume de l'espace de pression (50) peut être modifié par déplacement d'un élément de pression (2).

6. Dispositif d'injection (51) selon la revendication 3, dans lequel le canal d'écoulement de l'espace d'injection (30) est connecté hydrauliquement à l'écoulement par le biais d'une soupape de commutation commandable (52).

7. Dispositif d'injection (51) selon la revendication 6, dans lequel l'espace de commande (20) est connecté hydrauliquement à l'écoulement par le biais de la soupape de commutation commandable (52).
